# EUROPEAN PATENT APPLICATION

(11) **EP 2 424 254 A2**
(43) Date of publication of application: **29.02.2012**
(21) Application number: 11174847.1
(22) Date of filing: 21.07.2011
(51) Int. Cl.: H04N 13/00

(54) **Image processing apparatus and method using 3D image format**

(30) Priority: 30.08.2010 KR 20100084346
(71) Applicant: Samsung Electronics Co., Ltd., Suwon-si, Gyeonggi-do 443-742 (KR)
(72) Inventor: Lee, Seok, 446-712 Gyeonggi-do (KR); Lee, Seung Sin, 446-712 Gyeonggi-do (KR); Park, Du Sik, 446-712 Gyeonggi-do (KR); Lee, Jae Joon, 446-712 Gyeonggi-do (KR); Wey, Ho Cheon, 446-712 Gyeonggi-do (KR); Oh, Byung Tae, 446-712 Gyeonggi-do (KR)
(74) Representative: Grootscholten, Johannes A.M.

(57) **Abstract**

An image processing apparatus and method using a three-dimensional (3D) image format are provided. According to an embodiment, the 3D image format may be configured to generate a mono video, a stereo video, and a multiview video, so that various images may be outputted through various displays without changing an existing an infrastructure.

## Description

### CROSS-REFERENCE TO RELATED APPLICATIONS

This application claims the priority benefit of Korean Patent Application No. 10-2010-0084346, filed on August 30, 2010, in the Korean Intellectual Property Office, the disclosure of which is incorporated herein by reference.

### BACKGROUND

### 1. Field

One or more example embodiments relate to an image processing apparatus and method, and more particularly, to an image processing apparatus and method for effectively performing three-dimensional (3D) image services using a 3D image format.

### 2. Description of the Related Art

For three-dimensional (3D) image services, an image may be photographed from a plurality of viewpoints, unlike a two dimensional (2D) image using a single camera, and the photographed image may be converted to a predefined format. In the related art, a stereo type format has been used for the 3D image service. In the stereo type format, even though the user can feel a sense of depth or a sense of distance, since a viewpoint of a viewer is fixed, reflecting a change in a viewpoint generated when moving a head or a position of the user may be impossible.

Thus, there is a desire for an image format that may readily reflect any change in viewpoint and that may process a multi-view video as well as the conventional mono video or stereo video without changing an existing infrastructure.

### SUMMARY

The foregoing and/or other aspects are achieved by providing an image processing apparatus, including: a processor to control one or more processor-executable units; an image acquisition unit to acquire a color image and a depth image from a plurality of photographing devices; and an image conversion unit to convert the color image and the depth image to the 3D image format.

The 3D image format may include a base view image and an additional view image for configuring a stereo video, and a satellite view1 image and a satellite view2 image for configuring a multiview video, and each of the satellite view1 image and the satellite view2 image may have the second resolution lower than or same as the first resolution of each of the base view image and the additional view image.

The 3D image format may include a base view image, an additional view image, and a satellite view1 image, and each of the additional view image and the satellite view1 image may have the second resolution lower than or same as the first resolution of the base view image.

The image processing apparatus may further include an image encoding unit to encode the depth image and the color image which are converted to the 3D image format.

The foregoing and/or other aspects are achieved by providing an image processing apparatus, including: a processor to control one or more processor-executable units; an image stream receiving unit to receive a 3D image stream including a 3D image format; and an image decoding unit to selectively decode the 3D image stream based on a view of an output image.

When the view of the output image is a multiview, the image processing apparatus may further include: a resolution restoration unit to restore, to an image having the first resolution, an image having the second resolution from at least one of images constituting a multiview video; and an image generating unit to generate the multiview video by synthesizing the images constituting the multiview video.

The foregoing and/or other aspects are achieved by providing an image processing method, including: acquiring a color image and a depth image from a plurality of photographing schemes; and converting, by way of a processor, the color image and the depth image to a 3D image format.

The image processing method may further include encoding the depth image and the color image which are converted to the 3D image format.

The foregoing and/or other aspects are achieved by providing an image processing method, including: receiving a 3D image stream including a 3D image format; and selectively decoding, by way of a processor, the 3D image stream based on a view of an output image.

When the view of the output image is a multiview, the image processing method may further include: restoring, to an image having the first resolution, an image having the second resolution from at least one of images constituting a multiview video; and generating the multiview video by synthesizing the images constituting the multiview video.

The foregoing and/or other aspects are achieved by providing a non-transitory computer-readable medium comprising a program for instructing a computer where a 3D image format is recorded, wherein the 3D image format includes a base view image and an additional view image for configuring a stereo video, and a satellite view1 image and a satellite view2 image for configuring a multiview video, and the satellite view1 image and the satellite view2 image has a second resolution lower than or same as a first resolution of each of the base view image and the additional view image.

The foregoing and/or other aspects are achieved by providing a non-transitory computer-readable medium comprising a program for instructing a computer where a 3D image format is recorded, wherein the 3D image format includes a base view image, an additional view image, and a satellite view1 image, and each of the additional view image and the satellite view1 image has a second resolution lower than or same as a first resolution of the base view image.

The example embodiments may include an image processing apparatus and method that may service a multiview video such as a stereoscopic display while servicing a mono video or a stereo video without changing an existing infrastructure.

The example embodiments may also include an image processing apparatus and method that may decode a mono video, a stereo video, and a multiview video to replay the decoded video, thereby providing backward compatibility to an inputted image stream and a display.

The foregoing and/or other aspects are achieved by providing an image processing apparatus using a three-dimensional (3D) image format. The image processing apparatus includes a processor to control one or more processor-executable units, an image acquisition unit to acquire images including a color image and a depth image from a plurality of photographing devices including a stereo camera and a satellite camera, the images being of a single subject from a plurality of views, and an image conversion unit to convert the acquired color images and depth images to the 3D image format including a base view image, an additional view image acquired from the stereo camera, and a satellite view image acquired from the satellite camera.

The foregoing and/or other aspects are achieved by providing an image processing apparatus. The image processing apparatus includes a processor to control one or more processor-executable units, an image stream receiving unit to receive a 3D image stream including a 3D image format including a base view image, an additional view image acquired from a stereo camera, and a satellite view image acquired from a satellite camera, and an image decoding unit to selectively decode the 3D image stream based on a view type of an output image for a connected display.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects will become apparent and more readily appreciated from the following description of embodiments, taken in conjunction with the accompanying drawings of which:
FIG. 1 illustrates an encoder and a decoder according to example embodiments;
FIG. 2 is a block diagram illustrating a detailed configuration of an encoder according to example embodiments;
FIG. 3 is a block diagram illustrating a detailed configuration of a decoder according to example embodiments;
FIG. 4 illustrates an example of a three-dimensional (3D) image format according to example embodiments;
FIG. 5 illustrates a process in which a satellite view image is generated according to example embodiments;
FIG. 6 illustrates a process in which a satellite view image is generated according to other example embodiments;
FIG. 7 illustrates an image stream configured by a 3D image format according to example embodiments;
FIG. 8 illustrates a process in which an image included in an image stream configured by a 3D image format is displayed according to example embodiments;
FIG. 9 illustrates a process in which an image is generated through mode selection according to example embodiments;
FIG. 10 illustrates an example of adding data to a 3D image format according to example embodiments;
FIG. 11 is a flowchart illustrating an encoding method according to example embodiments; and
FIG. 12 is a flowchart illustrating a decoding method according to example embodiments.

### DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

An encoder and a decoder described throughout the specification may correspond to an image processing apparatus.

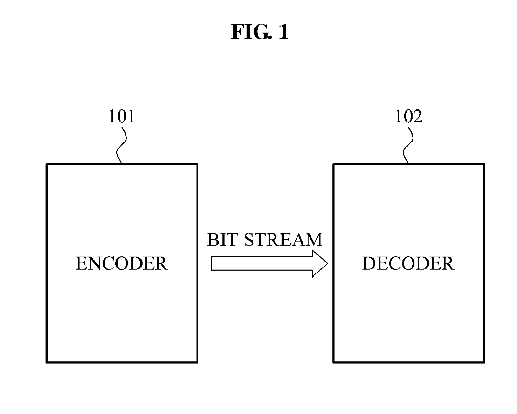

FIG. 1 illustrates an encoder 101 and a decoder 102 according to example embodiments.

The encoder 101 may convert, to a three-dimensional (3D) image format, a color image and a depth image which are acquired from a plurality of photographing devices, and may store the 3D image format. In this instance, the color image and the depth image, which are acquired from the plurality of photographing devices, may configure a plurality of views. That is, the plurality of photographing devices may photograph an image of a single subject from different views. In this manner, the image converted to the 3D image format may be transmitted to the decoder 102, and the decoder 102 may replay the transmitted image as one or more of a mono type two-dimensional (2D) image, a stereo type 3D image, or a multiview type 3D image based on an object of a user or a type of a display.

The 3D image format according to an embodiment may be configured to include two view images, that is, a base view image and an additional view image for a stereo video, and to additionally include a satellite view1 image and a satellite view2 image for a multiview video. In this instance, a resolution of each of the satellite view1 image and the satellite view2 image for the multiview video may be lower than a resolution of each of the base view image and the additional view image. In another example, a resolution of each of the satellite view1 image and the satellite view2 image for the multiview video may be same as a resolution of each of the base view image and the additional view image.

The 3D image format according to another embodiment may be configured to include a base view image, an additional view image, and a satellite view1 image. In this instance, a resolution of the additional view image and the satellite view1 image may be lower than a resolution of the base view image. In another example, a resolution of the additional view image and the satellite view1 image may be same as a resolution of the base view image. The base view image may configure a mono video, and the base view image and the additional view image or the base view image and the satellite view1 image may respectively configure a stereo video. Also, the base view image, the additional view image, and the satellite view1 image may configure a multiview image.

The decoder 120 may receive various types of image streams from the encoder 101. For example, the decoder 102 may generate an image stream configured to have the mono video, the stereo video, or the multiview video.

The decoder 102 may be connected to various types of displays. For example, the decoder 102 may extract, from the image stream configured in the 3D image format, another image in accordance with a type of the connected display. When the connected display is a 2D display, the decoder 102 may extract a mono video, and when the connected display is a stereo display, the decoder 102 may extract a stereo video. When the connected display is a stereoscopic display, the decoder 102 may extract a multiview image.

Hereinafter, the encoder 101 and the decoder 102 will be further described.

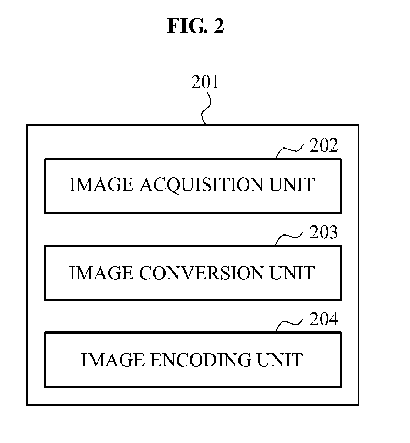

FIG. 2 is a block diagram illustrating a detailed configuration of an encoder 201 according to example embodiments.

Referring to FIG. 2, the encoder 201 may include, for example, an image acquisition unit 202, an image conversion unit 203, and an image encoding unit 204.

The image acquisition unit 202 may acquire a color image and a depth image from a plurality of photographing devices. In this instance, the plurality of photographing devices may photograph a single subject from a plurality of views. Here, the plurality of photographing devices may photograph images having the same resolution. In this instance, a portion of the plurality of photographing devices may photograph images having resolution lower than those images photographed by other photographing devices. In another example, a portion of the plurality of photographing devices may photograph images having resolution that is the same as those of images photographed by other photographing devices.

The image conversion unit 203 may convert the acquired color image and depth image to the 3D image format.

The 3D image format according to an embodiment may include a base view image and an additional view image for configuring a stereo video, and a satellite view1 image and a satellite view2 image for configuring a multiview video. In this instance, the base view image and the additional view image may be acquired from a photographing device such as a stereo camera having two views, and the satellite view1 image and the satellite view2 image may be acquired from a photographing device such as a satellite camera.

Here, the satellite view1 image may be arranged on a left side with respect to the base view image and the additional view image, and the satellite view2 image may be arranged on a right side with respect to the base view image and the additional view image.

In this instance, a resolution of each of two view images acquired from the satellite camera may be equal to or lower than a resolution of each of two view images acquired from the stereo camera. When a resolution of the satellite camera and a resolution of the stereo camera are the same, the image acquisition unit 202 may reduce the resolution of each of the two view images acquired from the satellite camera through Gaussian filtering. The image acquisition unit 202 may calculate a filter coefficient of a transform filter between an original resolution and the reduced resolution, and may store the calculated filter coefficient. In this instance, the transform filter may be a Wiener filter, for example.

The 3D image format according to another embodiment may be configured to have a base view image, an additional view image, and a satellite view1 image. In this instance, a resolution of each of the additional view image and the satellite view1 image may be lower than a resolution of the base view image. In another example, a resolution of each of the additional view image and the satellite view1 image may be same as a resolution of the base view image. The additional view image may be arranged on a left side with respect to the base view image, and the satellite view1 image may be arranged on a right side with respect to the base view image.

As a method for reducing resolution of an image, the following schemes may be adopted.

For example, the image conversion unit 203 may respectively interlace the satellite view1 image and the satellite view2 image each having a first resolution, so that each of the satellite view1 image and the satellite view2 image has a second resolution configured to have any one of an even-numbered line and an odd-numbered line. In this instance, the second resolution may be lower than the first resolution. In another example, the second resolution may be same as the first resolution.

For example, the satellite view1 image configuring the 3D image format may be configured to have only one of an even-numbered line and an odd-numbered line of the satellite view1 image acquired by the photographing device. Also, the satellite view2 image configuring the 3D image format may be configured to have only one of an even-numbered line and an odd-numbered line of the satellite view2 image acquired by the photographing device.

As another example, the image conversion unit 203 may allow each of the satellite view1 image and the satellite view2 image, each of the first resolution, to have a second resolution so that each of the satellite view1 image and the satellite view2 image is configured to have one of a top image and a bottom image. In this instance, the second resolution may be lower than the first resolution. In another example, the second resolution may be the same as the first resolution.

For example, the satellite view1 image configuring the 3D image format may be configured to have only one of a top image and a bottom image of the satellite view1 image acquired by the photographing device. Also, the satellite view2 image configuring the 3D image format may be configured to have only one of a top image and a bottom image of the satellite view2 image acquired by the photographing device.

In addition, the 3D image format may include additional information including at least one of transparency information and separation information of images included in the 3D image format, and meta information including at least one of camera information and a depth range.

The image encoding unit 240 may encode the color image and the depth image, which are converted to the 3D image format. The encoded depth image and color image may be transmitted to a decoder in a type of a bit stream.

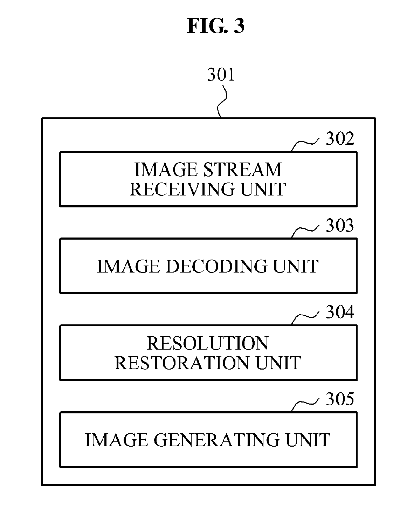

FIG. 3 is a block diagram illustrating a detailed configuration of a decoder 301 according to example embodiments.

Referring to FIG. 3, the decoder 301 may include, for example, an image stream receiving unit 302, an image decoding unit 303, a resolution restoration unit 304, and an image generating unit 305.

The image stream receiving unit 302 may receive a 3D image stream including the 3D image format from the decoder 301. In this instance, the decoder 301 according to an embodiment may support backward compatibility with respect to existing image data. That is, the image stream receiving unit 302 may receive an image stream including a mono video and a stereo video as well as an image stream including a newly defined 3D image format.

For example, the 3D image format may include a base view image and an additional view image for configuring the stereo video and a satellite view1 image and a satellite view2 image for configuring the multiview video. Here, each of the satellite view1 image and the satellite view2 image may have a second resolution lower than a first resolution of each of the base view image and the additional view image. In another example, each of the satellite view1 image and the satellite view2 image may have a second resolution the same as a first resolution of each of the base view image and the additional view image.

In the 3D image format, the satellite view1 image may be arranged on a left side with respect to the base view image and the additional view image, and the satellite view2 image may be arranged on a right side with respect to the base view image and the additional view image.

For another example, the 3D image format may include a base view image, an additional view image, and a satellite view1 image. Here, each of the additional view image and the satellite view1 image may have a second resolution lower than a first resolution of the base view image. In another example, each of the additional view image and the satellite view1 image may have a second resolution the same as a first resolution of the base view image. The additional view image in the 3D image format may be arranged on a left side with respect to the base view image, and the satellite view1 image may be arranged on a right side with respect to the base view image.

The image decoding unit 303 may selectively decode the3D image stream based on a view of an output image. That is, the decoder 301 according to an embodiment may support backward compatibility with respect to an existing display. Specifically, even when receiving only the 3D image stream including the 3D image format, the image stream receiving unit 302 may selectively decode the 3D image stream in accordance with the view of the output image for a connected display.

For example, when the connected display is a 2D display, the image decoding unit 303 may decode a mono video from the 3D image stream. Specifically, the image decoding unit 303 may decode only the base view image, that is, a basic view, in the 3D image format. When the connected display is a stereo display, the image decoding unit 303 may decode a stereo video. For example, the image decoding unit 303 may decode the base view image and the additional view image configuring the stereo video in the 3D image format.

When the view of the output image is a multiview, the resolution restoration unit 304 may restore an image having a second resolution from among at least one configuring the multiview image to an image having a first resolution. In this instance, the second resolution may be lower than the first resolution. In another example, the second resolution may be the same as the first resolution.

When the 3D image format includes the base view image and the additional view image for configuring the stereo video, and the satellite view1 image and the satellite view2 image for configuring the multiview image, the resolution restoration unit 304 may restore the satellite view1 image and the satellite view2 image each having the second resolution to have the first resolution, that is, the same resolution of each of the base view image and the additional view image.

As described with reference to FIG. 2, each of the satellite view1 image and the satellite view2 image may have a resolution lower than the resolution of each of the base view image and the additional view image. In another example, each of the satellite view1 image and the satellite view2 image may have a resolution the same as the resolution of each of the base view image and the additional view image. When each of the satellite view1 image and the satellite view2 image has the same resolution as that of each of the base view image and the additional view image, the satellite view1 image and the satellite view2 image configuring the 3D image format may be an image of which the resolution has been changed to be configured to have only one of the even-numbered line and the odd-numbered line through interlacing. Also, when each of the satellite view1 image and the satellite view2 image has the same resolution as each of the base view image and the additional view image, the satellite view1 image and the satellite view2 image configuring the 3D image format may be an image of which the resolution has been changed to be configured to have only one of the top image and the bottom image.

When the 3D image format includes the base view image, the additional view image, and the satellite view1 image, the resolution restoration unit 304 may restore the additional view image and the satellite view1 image each having the second resolution to have the first resolution, that is, to have the same resolution as the base view image.

When the 3D image format includes the base view image and the additional view image configuring the stereo video, and the satellite view1 image and the satellite view2 image for configuring the satellite view1 image and the satellite view2 image for configuring the multiview image, the image generating unit 305 may synthesize the base view image, the additional view image, the satellite view1 image, and the satellite view2 image to thereby generate a multiview image. Alternatively, when the 3D image format includes the base view image, the additional view image, and the satellite view1 image, the image generating unit 305 may synthesize the base view image, the additional view image, and the satellite view1 image to thereby generate a multiview image.

That is, when the connected display is the stereoscopic display, the image decoding unit 303 may extract the multiview image. Specifically, the image decoding unit 303 may decode an image configuring the multiview image from the 3D image format. In this instance, the resolution restoration unit 304 may restore an image having a lower resolution to an image having an original resolution. Then, the image generating unit 305 may generate the multiview image using the image for which the resolution has been restored.

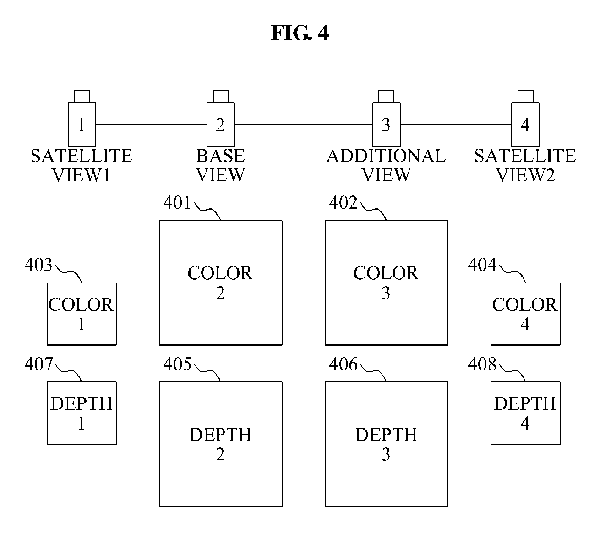

FIG. 4 illustrates an example of a 3D image format according to example embodiments.

Referring to FIG. 4, a base view image may be a color image 401 and a depth image 405. An additional view image may be a color image 402 and a depth image 406. Also, a satellite view1 image may be a color image 403 and a depth image 407. The satellite view2 image may be a color image 404 and a depth image 408. As illustrated in FIG. 4, the satellite view1 image may be arranged on a left side with respect to the base view image and the additional view image, and the satellite view2 image may be arranged on a left side with respect to the base view image and the additional view image.

The base view image may configure a mono video. The base view image and the additional view image may denote a left image and a right image of a stereo video. The base view image, the additional view image, the satellite view1 image, and the satellite view2 image may configure a multiview video. A number of images corresponding to the satellite view1 image and the satellite view2 image may be changed in accordance with a configuration of a system.

A resolution of each of the satellite view1 image and the satellite view2 image may be lower than a resolution of each of the base view image and the additional view image. For configuration of the multiview image in the future, the resolution of the satellite view1 image and the satellite view2 image may be restored to have the same resolution of each of the base view image and the additional view image, and then the restored satellite view1 image and satellite view2 image may be synthesized with the base view image and the additional view image.

When each of the satellite view1 image and the satellite view2 image has the same resolution of each of the base view image and the additional view image while acquiring images, the satellite view1 image and the satellite view2 image may be subjected to a process in which a resolution is changed.

Specifically, one of the even-numbered lines and the odd-numbered lines of each of the satellite view1 image and the satellite view2 image, which are photographed by the photographing device, may be selected so that the resolution of each of the satellite view1 image and the satellite view2 image configuring the 3D image format may be reduced. Also, one of the top image and the bottom image of each of the satellite view1 image and the satellite view2 image, which are photographed by the photographing device, may be selected so that the resolution of each of the satellite view1 image and the satellite view2 image configuring the 3D image format may be reduced.

Referring to FIG. 4, the 3D image format may include the base view image and the additional view image for configuring the stereo video, and the satellite view1 image and the satellite view2 image for configuring the multiview video.

In addition, the 3D image format according to another embodiment may include the base view image, the additional view image, and the satellite view1 image. In this instance, each of the additional view image and the satellite view1 image may have a resolution lower than the resolution of the base view image. In another example, each of the additional view image and the satellite view1 image may have a resolution the same as the resolution of the base view image. The additional view image in the 3D format may be arranged on a left side with respect to the base view image, and the satellite view1 image may be arranged on a right side with respect to the base view image.

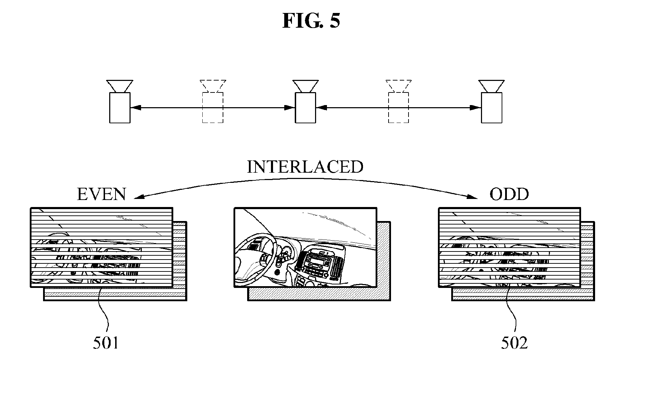

FIG. 5 illustrates a process in which a satellite view image is generated according to example embodiments.

When the 3D image format includes a base view image and an additional view image for configuring a stereo video, and a satellite view1 image and a satellite view2 image for configuring a multiview video, each of the satellite view1 image and the satellite view2 image may have a resolution lower than a resolution of each of the base view image and the additional view image. In another example, each of the satellite view1 image and the satellite view2 image may have a resolution the same as a resolution of each of the base view image and the additional view image.

When the satellite view1 image and the satellite view2 image having the same resolution as that of each of the base view image and the additional view image are acquired, the satellite view1 image and the satellite view2 image may be subjected to a process in which a resolution is changed.

That is, as illustrated in FIG. 5, the resolution of each of the satellite view1 image and the satellite view2 image may be changed through interlacing. An even-numbered image 501 may be an image in which only an even-numbered line may be selected from the satellite view1 image or the satellite view2 image acquired by the photographing device, and a corresponding resolution may be reduced by 1/2. An odd-numbered image 502 may be an image in which only an odd-numbered line may be selected from the satellite view1 image or the satellite view2 image acquired by the photographing device, and a corresponding resolution may be reduced by 1/2.

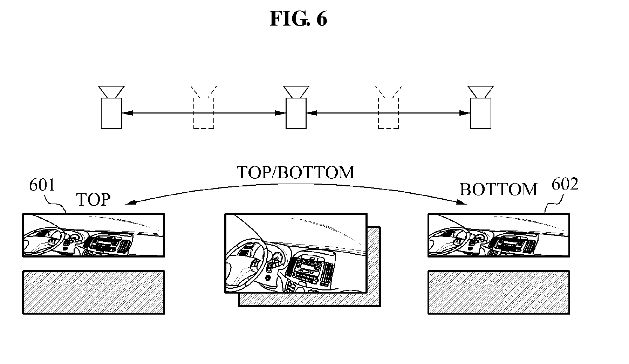

FIG. 6 illustrates a process in which a satellite view image is generated according to other example embodiments.

When the 3D image format includes a base view image and an additional view image for configuring a stereo video and a satellite view1 image and a satellite view2 image for configuring a multiview video, each of the satellite view1 image and the satellite view2 image may have a resolution lower than a resolution of each of the base view image and the additional view image. In another example, each of the satellite view1 image and the satellite view2 image may have a resolution the same as a resolution of each of the base view image and the additional view image.

When the satellite view1 image and the satellite view2 image each having the same resolution as that of each of the base view image and the additional view image are acquired, the satellite view1 image and the satellite view2 image may be subjected to a process in which a resolution is changed.

That is, in FIG. 6, a process in which the resolution of each of the satellite view1 image and the satellite view2 image is changed through image separation is illustrated. A top image 601 may be an image in which a top portion and a bottom portion of the satellite view1 image or the satellite view2 image acquired by the photographing device may be separated, only the top portion may be selected, and a corresponding resolution may be reduced by 1/2.

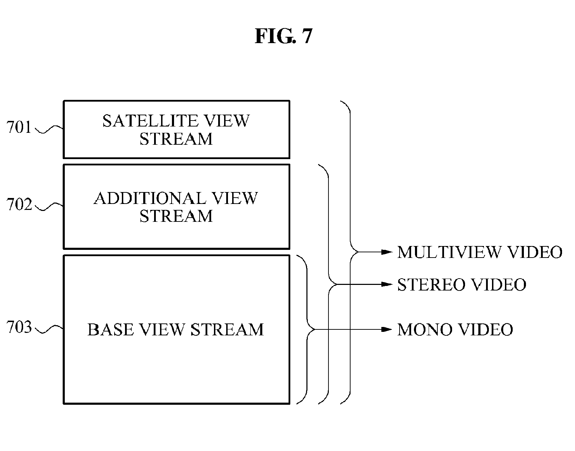

FIG. 7 illustrates an image stream configured by a 3D image format according to example embodiments.

The 3D image format according to an embodiment may include a base view image and an additional view image for configuring a stereo video, and a satellite view1 image and a satellite view2 image for configuring a multiview image. Here, each of the satellite view1 image and the satellite view2 image may have a resolution lower than a resolution of each of the base view image and the additional view image. In another example, each of the satellite view1 image and the satellite view2 image may have a resolution the same as a resolution of each of the base view image and the additional view image. The satellite view1 image may be arranged on a left side with respect to the base view image and the additional view image, and the satellite view2 image may be arranged on a right side with respect to the base view image and the additional view image.

Referring to FIG. 7, a base view image 703 may configure a mono video. A base view image 703 and an additional view image 702 may configure a stereo video. Also, a base view image 703, an additional view image 702, and a satellite view1 image/a satellite view2 image 701 may configure a multiview video. That is, three different types of images may be obtained by the 3D image format according to an embodiment.

The 3D image format according to another embodiment may include the base view image, the additional view image, and the satellite view1 image, and each of the additional view image and the satellite view1 image may have a resolution lower than a resolution of the base view image. In another example, the 3D image format may include the base view image, the additional view image, and the satellite view1 image, and each of the additional view image and the satellite view1 image may have a resolution the same as the resolution of the base view image. Here, the additional view image may be arranged on a left side with respect to the base view image, and the satellite view1 image may be arranged on a right side with respect to the base view image. In addition, the base view image may configure the mono video. The base view image and the additional view image may configure the stereo video. Also, the base view image and the satellite view1 image may configure the stereo video. Also, the base view image, the additional view image, and the satellite view1 image may configure the multiview image.

Accordingly, the decoder according to an embodiment may extract different types of images in accordance with a type of a connected display.

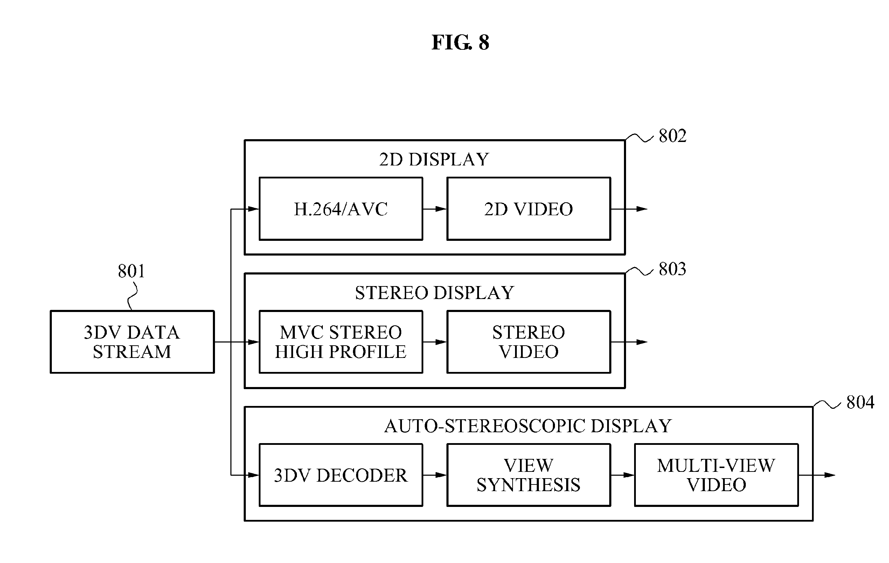

FIG. 8 illustrates a process in which an image included in an image stream configured by a 3D image format is displayed according to example embodiments.

Referring to FIG. 8, it may be assumed that the decoder receives an image stream 801 configured in the 3D image format. In this instance, the 3D image format may include a base view image and an additional view image for configuring a stereo video, and a satellite view1 image and a satellite view2 image for configuring a multiview image. Here, each of the satellite view1 image and the satellite view2 image may have a resolution lower than a resolution of each of the base view image and the additional view image. In another example, each of the satellite view1 image and the satellite view2 image may have a resolution the same as a resolution of each of the base view image and the additional view image.

The satellite view1 image may be arranged on a left side with respect to the base view image and the additional view image, and the satellite view2 image may be arranged on a right side with respect to the base view image and the additional view image.

Referring to FIG. 8, the decoder may support backward compatibility with respect to a display. That is, a 2D display 802 and a stereo display 803 may each correspond to a conventional display.

When a display device connected to the decoder is the 2D display 802 displaying a mono video, the decoder may decode the base view image configuring the 3D image format through H.264, Advanced Video Coding (AVC), or the like to thereby generate mono video.

When the display device connected to the decoder is the stereo display 803 displaying a stereo video, the decoder may decode the base view image and the additional view image configuring the 3D image format through Multiview Video Coding (MVC) stereo high profile to thereby generate stereo video.

Also, when the display device connected to the decoder is the stereoscopic display 804 displaying a multiview video, the decoder may decode the base view image, the additional view image, the satellite view1 image, and the satellite view2 image which configure the 3D image format to thereby generate a multiview video.

FIG. 8 may be identically applied to a case in which the 3D image format includes the base view image, the additional view image, and the satellite view1 image, and each of the additional view image and the satellite view1 image has a resolution lower than the resolution of the base view image. In another example, FIG. 8 may be identically applied to a case in which the 3D image format includes the base view image, the additional view image, and the satellite view1 image, and each of the additional view image and the satellite view1 image has a resolution the same as the resolution of the base view image. The base view image and the additional view image may configure the stereo video. Also, the base view image and the satellite view1 image may configure the stereo video. The base view image, the additional view image, and the satellite view1 image may configure the multiview image.

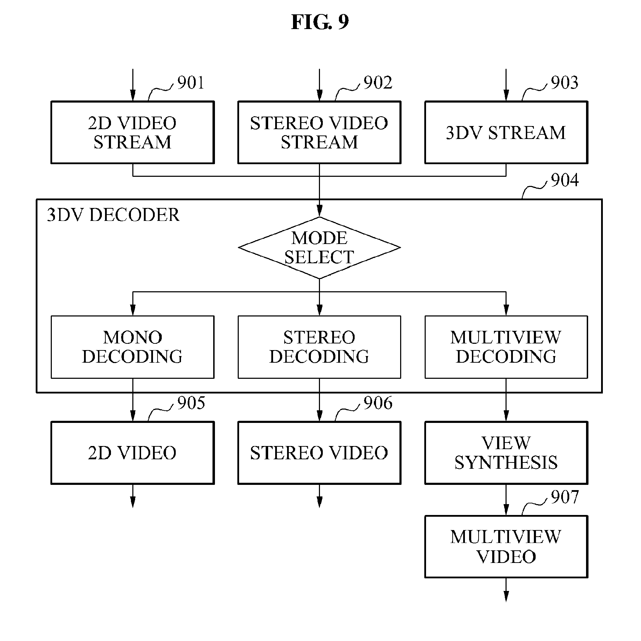

FIG. 9 illustrates a process in which an image is generated through mode selection according to example embodiments.

Referring to FIG. 9, it may be assumed that the decoder receives an image stream 901 including a mono video and an image stream 902 including a stereo video as well as an image stream 903 including a 3D image format. Referring to FIG. 9, the decoder may support backward compatibility with respect to the image stream. That is, the image stream 901 and the image stream 902 may denote a conventional image stream. In addition, the image stream 903 may denote an image stream according to an embodiment.

A decoder 904 may select an output mode based on a view of an output image. When the output image is a mono video, the decoder 904 may select an output mode of decoding a mono video 905 having a single view. When the output image is a stereo video, the decoder 904 may select an output mode of decoding a stereo video 906 having two views. Also, when the output image is a multiview video, the decoder 904 may select an output mode of decoding a multiview video 907 having n views, where n is greater than 4.

Next, the decoder 904 may decode the respective image stream in accordance with the selected output mode, and generate the mono video 905 and the stereo video 906. When decoding the multiview image video from the image stream 903, the decoder may synthesize the base view image, the additional view image, the satellite view1 image, and the satellite view2 image, which configure the multiview video 907, and may generate the multiview video 907. As described above, the resolution of each of the satellite view1 image and the satellite view2 image may be restored to the same resolution as that of each of the base view image and the additional view image, and then synthesized.

FIG. 9 may be identically applied to a case in which the 3D image format includes the base view image, the additional view image, and the satellite view1 image, and each of the additional view image and the satellite view1 image has a resolution lower than the resolution of the base view image. In another example, FIG. 9 may be identically applied to a case in which the 3D image format includes the base view image, the additional view image, and the satellite view1 image, and each of the additional view image and the satellite view1 image has a resolution same as the resolution of the base view image. Here, the base view image may configure a mono video. The base view image and the additional view image may configure a stereo video. Also, the base view image and the satellite view1 image may configure a stereo video. In addition, the base view image, the additional view image, and the satellite view1 image may configure the multiview video.

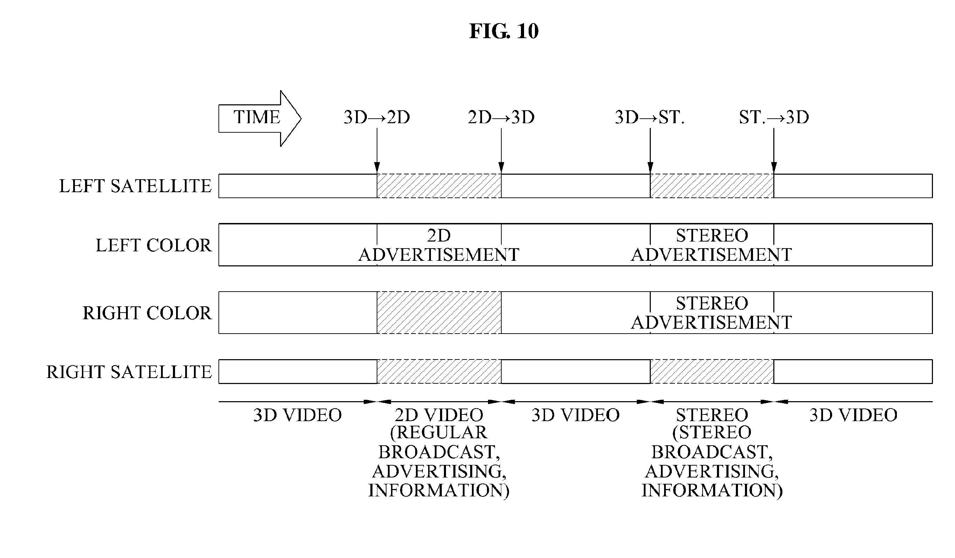

FIG. 10 illustrates an example of adding data to a 3D image format according to example embodiments.

Referring to FIG. 10, a left color image, a right color image, a left satellite view, and a right satellite view, which are included in the 3D image format, may be synthesized and a mono video (2D) or a stereo video may be inserted when replaying a multiview video.

According to an embodiment, since the 3D image format has a structure of processing the mono video and the stereo video, additional processing may not need to be performed even though the mono video (2D) or the stereo video has been inserted. That is, a decoder may insert a 2D advertisement into the left color image, or a stereo advertisement into the left color image and the right color image without performing additional processing. In this instance, when the 2D advertisement is inserted, the right color image, the left satellite image, and the right satellite image may be changed to have a null value. When the stereo advertisement is inserted, the left satellite image and the right satellite image may be changed to have a null value.

FIG. 10 may be identically applied to a case in which the 3D image format includes the left color image, the right color image, and the left satellite image, and each of the right color image and the left satellite image has a resolution lower than a resolution of the left color image. In another example, FIG. 10 may be identically applied to a case in which the 3D image format includes the left color image, the right color image, and the left satellite image, and each of the right color image and the left satellite image has a resolution same as a resolution of the left color image. Here, the left color image may configure a mono video. The left color image and the right color image may configure a stereo video. Also, the left color image and the left satellite image may configure the stereo video. In addition, the left color image, the right color image, and the left satellite image may configure a multiview video.

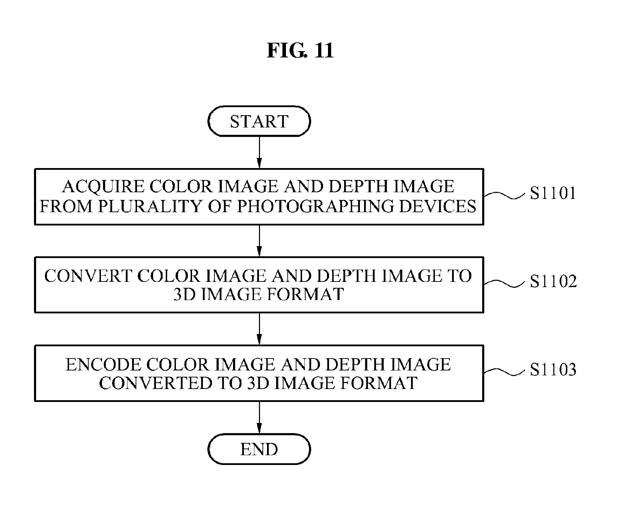

FIG. 11 is a flowchart illustrating an encoding method according to example embodiments.

In operation S1101, an encoder may acquire a color image and a depth image from a plurality of photographing devices.

In operation S1102, the encoder may convert the color image and the depth image to a 3D image format. For example, the 3D image format may include a base view image and an additional view image for configuring a stereo video, and a satellite view1 image and a satellite view2 image for configuring a multiview video. In this instance, each of the satellite view1 image and the satellite view2 image may have a resolution lower than a resolution of each of the base view image and the additional view image. In another example, each of the satellite view1 image and the satellite view2 image may have a resolution the same as a resolution of each of the base view image and the additional view image. The satellite view1 image may be arranged on a left side with respect to the base view image and the additional view image, and the satellite view2 image may be arranged on a right side with respect to the base view image and the additional view image.

The 3D image format may include the base view image, the additional view image, and the satellite view1 image, and each of the additional view image and the satellite view1 image has a resolution lower than the resolution of the base view image. In another example, the 3D image format may include the base view image, the additional view image, and the satellite view1 image, and each of the additional view image and the satellite view1 image has a resolution that is the same as the resolution of the base view image. Here, the base view image may configure a mono video. The base view image and the additional view image may configure a stereo video. Also, the base view image and the satellite view1 image may configure the stereo video. In addition, the base view image, the additional view image, and the satellite view1 image may configure a multiview video. Here, the satellite view1 image may be arranged on a left side with respect to the base view image and the additional view image, and the satellite view2 image may be arranged on a right side with respect to the base view image and the additional view image.

For example, when the resolution of each of the base view image, the additional view image, and the satellite view1 image, which configure the stereo video, is the same as that of the satellite view2 image, the encoder may convert the resolution of the satellite view1 image and the resolution of the satellite view2 image.

In this instance, the encoder may reduce the resolution by respectively interlacing the satellite view1 image and the satellite view2 image, which are acquired by the photographing device, so that each of the satellite view1 image and the satellite view2 image may include any one of an even-numbered line and an odd-numbered line. The encoder may reduce the resolution by respectively separating, into a top image or a bottom image, the satellite view1 image and the satellite view2 image which are acquired by the photographing device, so that each of the satellite view1 image and the satellite view2 image may include any one of the top image and the bottom image.

The 3D image format may further include additional information having at least one of transparency information of images included in the 3D image format and separation information, and meta information having at least one of a camera parameter and a depth range.

In operation S1103, the encoder may encode the depth image and the color image, which have been converted to the 3D image format.

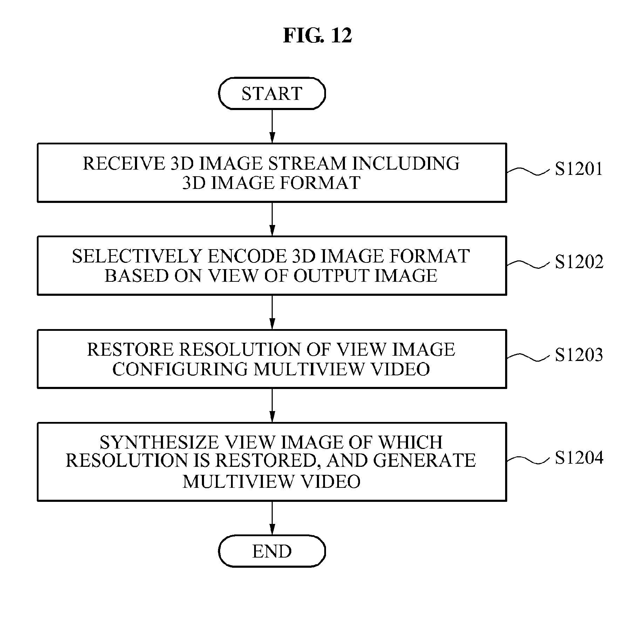

FIG. 12 is a flowchart illustrating a decoding method according to example embodiments.

In operation 1201, a decoder may receive a 3D image stream including a 3D image format. For example, the 3D image format may include a base view image and an additional view image for configuring a stereo video, and a satellite view1 image and a satellite view2 image for configuring a multiview video. In this instance, each of the satellite view1 image and the satellite view2 image may have a resolution lower than a resolution of each of the base view image and the additional view image. In another example, each of the satellite view1 image and the satellite view2 image may have a resolution the same as a resolution of each of the base view image and the additional view image. The satellite view1 image may be arranged on a left side with respect to the base view image and the additional view image, and the satellite view2 image may be arranged on a right side with respect to the base view image and the additional view image.

The 3D image format may include the base view image, the additional view image, and the satellite view1 image, and each of the additional view image and the satellite view1 image may have a resolution lower than that of the base view image. In another example, the 3D image format may include the base view image, the additional view image, and the satellite view1 image, and each of the additional view image and the satellite view1 image may have a resolution the same as that of the base view image. Here, the base view image may configure a mono video. The base view image and the additional view image may configure a stereo video. Also, the base view image and the satellite view1 image may configure the stereo video. In addition, the base view image, the additional view image, and the satellite view1 image may configure a multiview video. Here, the satellite view1 image may be arranged on a left side with respect to the base view image and the additional view image, and the satellite view2 image may be arranged on a right side with respect to the base view image and the additional view image.

In operation S1202, the decoder may selectively decode the 3D image stream based on a view of an output image.

In operation 1203, when the view of the output image is a multiview video, the decoder may restore an image having a lower resolution from among at least one image configuring the multiview video to an image having an original resolution.

In operation S1204, the decoder may synthesize the images configuring the multiview video, and may generate the multiview video.

Portions not described with regards to FIGS. 11 and 12 may be analogous to corresponding portions described with reference to FIGS. 1 to 10 and thus, are omitted herein for brevity and clarity.

The image processing method according to the above-described embodiments may be recorded in non-transitory computer-readable media including program instructions to implement various operations embodied by a computer. The media may also include, alone or in combination with the program instructions, data files, data structures, and the like.

Examples of non-transitory computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa. Any one or more of the software modules or units described herein may be executed by a dedicated processor unique to that unit or by a processor common to one or more of the modules. The described methods may be executed on a general purpose computer or processor or may be executed on a particular machine such as the image processing apparatuses described herein.

Although embodiments have been shown and described, it would be appreciated by those skilled in the art that changes may be made in these embodiments without departing from the principles and spirit of the disclosure, the scope of which is defined by the claims and their equivalents.

In particular the appended claims are directed at 3D image acquisition using photographing devices. In an alternative, another invention, as described above and directly derivable therefrom, can relate to supply of a 3D image stream to be decoded. For such an alternative, which may be made the subject of a future divisional application, the invention may be defined as follows:

1. An image processing apparatus, comprising:

a processor to control one or more processor-executable units;

an image stream receiving unit to receive a 3D image stream including a 3D image format; and

an image decoding unit to selectively decode the 3D image stream based on a view of an output image,

wherein the 3D image format includes at least one image having a first resolution and at least one image having a second resolution, the second resolution being at most equal to the first resolution.

2. The image processing apparatus of claim 1, wherein:

the 3D image format includes a base view image and an additional view image for configuring a stereo video, and a satellite view1 image and a satellite view2 image for configuring a multiview video, and

each of the satellite view1 image and the satellite view2 image has the second resolution and each of the base view image and the additional view image has the first resolution.

3. The image processing apparatus of claim 2, wherein the satellite view1 image or the satellite view2 image has the second resolution configured to include an even-numbered line or an odd-numbered line through an interlacing operation performed on the satellite view1 image or the satellite view2 image.

4. The image processing apparatus of claim 2 or 3, wherein the satellite view1 image or the satellite view2 image is configured to include a top image or an odd-numbered image to thereby have the second resolution.

5. The image processing apparatus of any preceding claim, wherein the 3D image format includes a base view image, an additional view image, and a satellite view1 image, and each of the additional view image and the satellite view1 image has the second resolution and the base view image has the first resolution.

6. The image processing apparatus of claim 5, wherein the additional view image is arranged on a left side with respect to the base view image, and the satellite view1 image is arranged on a right side with respect to the base view image.

7. The image processing apparatus of any preceding claim, wherein, when the view of the output image is a multiview, the image processing apparatus further includes:

a resolution restoration unit to restore, to an image having the first resolution, an image having the second resolution from at least one of images constituting a multiview video; and

an image generating unit to generate the multiview video by synthesizing the images constituting the multiview video.

8. An image processing method, comprising:

receiving a 3D image stream including a 3D image format; and

selectively decoding, by way of a processor, the 3D image stream based on a view of an output image,

wherein the 3D image format is configured to include at least one image having a first resolution and at least one image having a second resolution, the second resolution being at most equal to the first resolution.

9. The image processing method of claim 8, wherein:

the 3D image format includes a base view image and an additional view image for configuring a stereo video acquired from each of a plurality of photographing schemes having different views, and a satellite view1 image and a satellite view2 image for configuring a multiview video, and

each of the satellite view1 image and the satellite view2 image has the second resolution and each of the base view image and the additional view image has the first resolution.

10. The image processing method of claim 9, wherein each of the satellite view1 image and the satellite view2 image has the second resolution configured to include an even-numbered line or an odd-numbered line through an interlacing operation performed on the satellite view1 image or the satellite view2 image.

11. The image processing method of claim 9, wherein the satellite view1 image or the satellite view2 image is configured to include a top image or an odd-numbered image to thereby have the second resolution.

12. The image processing method of claim 9, wherein the 3D image format includes the base view image, the additional view image, and the satellite view1 image each being acquired from each of the plurality of photographing schemes, and has the second resolution and the base view image has the first resolution.

13. The image processing method of claim 12, wherein the additional view image is arranged on a left side with respect to the base view image, and the satellite view1 image is arranged on a right side with respect to the base view image.

14. The image processing method of claim 8, wherein, when the view of the output image is a multiview, the image processing method further includes:

restoring, to an image having the first resolution, an image having the second resolution from at least one of images constituting a multiview video; and

generating the multiview video by synthesizing the images constituting the multiview video.

Yet other inventions, directly and unambiguously derivable from the preceding description, may be defined as follows:

A non-transitory computer-readable medium comprising a program for instructing a computer where a 3D image format is recorded,

wherein the 3D image format includes a base view image and an additional view image for configuring a stereo video, and a satellite view1 image and a satellite view2 image for configuring a multiview video, and the satellite view1 image and the satellite view2 image has a second resolution lower than a first resolution of each of the base view image and the additional view image.

A non-transitory computer-readable medium comprising a program for instructing a computer where a 3D image format is recorded,

wherein the 3D image format includes a base view image, an additional view image, and a satellite view1 image, and each of the additional view image and the satellite view1 image has a second resolution lower than a first resolution of the base view image.

A non-transitory computer-readable medium comprising a program for instructing a computer where a 3D image format is recorded,

wherein the 3D image format includes a base view image and an additional view image for configuring a stereo video, and a satellite view1 image and a satellite view2 image for configuring a multiview video, and the satellite view1 image and the satellite view2 image has a second resolution same as a first resolution of each of the base view image and the additional view image.

A non-transitory computer-readable medium comprising a program for instructing a computer where a 3D image format is recorded,

wherein the 3D image format includes a base view image, an additional view image, and a satellite view1 image, and each of the additional view image and the satellite view1 image has a second resolution same as a first resolution of the base view image.

An image processing apparatus using a three-dimensional (3D) image format, the image processing apparatus comprising:

a processor to control one or more processor-executable units;

an image acquisition unit to acquire images including a color image and a depth image from a plurality of photographing devices including a stereo camera and a satellite camera, the images being of a single subject from a plurality of views; and

an image conversion unit to convert the acquired color images and depth images to the 3D image format including a base view image, an additional view image acquired from the stereo camera, and a satellite view image acquired from the satellite camera.

Additionally, such an image processing apparatus may exhibit the features that the 3D image format is configured to include the base view image, but not the additional view image and the satellite view image, for display of a mono display, to include the base view image and the additional view image but not the satellite view image, for display of a stereo display, and to include all of the base view image, the additional view image and the satellite view image for display of a multiview display.

Additionally or alternatively such an image processing apparatus may exhibit the features that each of the additional view image and the satellite view image has a second resolution lower than a first resolution of the base view image.

An image processing apparatus, comprising:

a processor to control one or more processor-executable units;

an image stream receiving unit to receive a 3D image stream including a 3D image format including a base view image, an additional view image acquired from a stereo camera, and a satellite view image acquired from a satellite camera; and

an image decoding unit to selectively decode the 3D image stream based on a view type of an output image for a connected display.

Additionally, such an image processing apparatus may exhibit the features that

when the connected display is a mono display, the image decoding unit decodes the base view image and the additional view image without decoding the satellite view image;

when the connected display is a stereo display, the image decoding unit decodes the base view image and the additional view image without decoding the satellite view image; and

when the connected display is a multiview display, the image decoding unit decodes all of the base view image, the additional view image and the satellite view image.

Additionally or alternatively such an image processing apparatus may exhibit the features that each of the additional view image and the satellite view image has a second resolution lower than a first resolution of the base view image.

## Claims

1. An image processing apparatus using a three-dimensional (3D) image format, the image processing apparatus comprising:
a processor to control one or more processor-executable units;
an image acquisition unit to acquire a color image and a depth image from a plurality of photographing devices; and
an image conversion unit to convert the color image and the depth image to the 3D image format,
wherein the 3D image format is configured to include at least one image having a first resolution and at least one image having a second resolution, the second resolution being at most equal to the first resolution.

2. The image processing apparatus of claim 1, wherein:
the 3D image format includes a base view image and an additional view image for configuring a stereo video, and a satellite view1 image and a satellite view2 image for configuring a multiview video, and
each of the satellite view1 image and the satellite view2 image has the second resolution and each of the base view image and the additional view image has the first resolution.

3. The image processing apparatus of claim 2, wherein the satellite view1 image is arranged on a left side with respect to the base view image and the additional view image, and the satellite view2 image is arranged on a right side with respect to the base view image and the additional view image.

4. The image processing apparatus of claim 2 or 3, wherein the image conversion unit interlaces the satellite view1 image or the satellite view2 image, each having the first resolution, so that the satellite view1 image or the satellite view2 image has the second resolution configured to include an even-numbered line or an odd-numbered line.

5. The image processing apparatus of claim 2, 3 or 4, wherein the image conversion unit selects a top image or a bottom image from the satellite view1 image or the satellite view2 image, each having the first resolution so that the selected image has the second resolution.

6. The image processing apparatus of any preceding claim, further comprising:
an image encoding unit to encode the depth image and the color image, which are each converted to the 3D image format.

7. An image processing method, comprising:
acquiring a color image and a depth image from a plurality of photographing schemes; and
converting, by way of a processor, the color image and the depth image to a 3D image format,
wherein the 3D image format is configured to include at least one image having a first resolution and at least one image having a second resolution lower than the first resolution.

8. The image processing method of claim 7, wherein:
the 3D image format includes a base view image and an additional view image for configuring a stereo video acquired from each of the plurality of photographing schemes, and a satellite view1 image and a satellite view2 image for configuring a multiview video, and
each of the satellite view1 image and the satellite view2 image has the second resolution and each of the first base view image and the additional view image has the first resolution.

9. The image processing method of claim 8, wherein the satellite view1 image is arranged on a left side with respect to the base view image and the additional view image, and the satellite view2 image is arranged on a right side with respect to the base view image and the additional view image.

10. The image processing method of claim 8 or 9, wherein the converting interlaces the satellite view1 image or the satellite view2 image, each having the first resolution, so that the satellite view1 image or the satellite view2 image has the second resolution configured to include an even-numbered line or an odd-numbered line.

11. The image processing method of claim 8, 9 or 10, wherein the converting selects a top image or a bottom image from the satellite view1 image or the satellite view2 image each having the first resolution so that the selected image has the second resolution.

12. The image processing method of any of preceding claims 7-11, further comprising:
encoding the depth image and the color image, which are each converted to the 3D image format.

13. The image processing apparatus or method of any preceding claim, wherein the 3D image format includes a base view image, an additional view image, and a satellite view1 image, and each of the additional view image and the satellite view1 image has the second resolution.

14. The image processing apparatus or method of claim 13, wherein the additional view image is arranged on a left side with respect to the base view image, and the satellite view1 image is arranged on a right side with respect to the base view image.

15. The image processing apparatus or method of any preceding claim , wherein the 3D image format further includes additional information having at least one of transparency information and separation information of images included in the 3D image format, and meta information having at least one of a camera parameter and a depth range.
